(19) Europäisches Patentamt
European Patent Office
Office européen des brevets

(11) EP 1 978 066 B1

(12) EUROPEAN PATENT SPECIFICATION

(45) Date of publication and mention of the grant of the patent:
**14.12.2011 Bulletin 2011/50**

(51) Int Cl.:
***C09D 183/10*** *(2006.01)* ***C09D 151/08*** *(2006.01)*
***C09D 167/06*** *(2006.01)* ***C23C 22/00*** *(2006.01)*

(21) Application number: **08251330.0**

(22) Date of filing: **04.04.2008**

(54) **Metal surface treating agents, their preparation, use in treating steel materials, coated steel materials and their production**

Metalloberflächenbehandlungsmittel, deren Herstellung, Verwendung bei der Behandlung von Stahlmaterialien, beschichtete Stahlmaterialien und deren Herstellung

Agents de traitement de surface métallique, leur préparation, utilisation pour le traitement de matériaux en acier, matériaux en acier revêtu et leur fabrication

(84) Designated Contracting States:
**DE FR GB**

(30) Priority: **06.04.2007 JP 2007100098**

(43) Date of publication of application:
**08.10.2008 Bulletin 2008/41**

(73) Proprietor: **Shin-Etsu Chemical Co., Ltd.**
**Tokyo (JP)**

(72) Inventors:
- **Tsuchida, Kazuhiro**
**Annaka-shi**
**Gunma-ken (JP)**
- **Yamaya, Masaaki**
**Annaka-shi**
**Gunma-ken (JP)**

(74) Representative: **Stoner, Gerard Patrick et al**
**Mewburn Ellis LLP**
**33 Gutter Lane**
**London**
**EC2V 8AS (GB)**

(56) References cited:
**EP-A- 1 925 627**
**EP-A- 1 947 124**
**WO-A-86/07072**
**DE-A1-102005 023 107**
**JP-A- 8 073 775**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to a metal surface treating agent for a cold rolled steel material, hot rolled steel material, stainless steel material, and coated steel materials such as electrogalvanized steel material, hot dip galvanized steel material, zinc-aluminum alloy-plated steel material, zinc-iron alloy-plated steel material, zinc-magnesium alloy-plated steel material, zinc-aluminum-magnesium alloy-plated steel material, aluminum alloy-plated steel material, aluminum-silicon alloy-plated steel material, tin-plated steel material, lead-tin alloy-plated steel material, chromium-plated steel material, and nickel-plated steel material; a surface treated steel material which has been treated with such surface treating agent, and a method for treating a metal surface with such surface treating agent; and a coated steel material having an overcoat formed on the surface treated steel material, and its production method.

### BACKGROUND

A metal surface treatment has been conducted by using a chromium-based surface treating agents, for example, by chromate treatment and phosphate chromating treatment, and these agents are still being widely used. However, considering recent trend of environmental restrictions, use of these metal surface treating agents is highly likely to be restricted in near future because of the toxicity, and in particular, oncogenicity of the chromium. Accordingly, development of a chromium-free metal surface treating agent which exhibits adhesion and corrosion resistance equivalent to those of the chromate treating agents is highly awaited.

Japanese Patent Application Laid-Open No. 11-29724 (Patent Document 1) discloses a chromium-free rust preventive agent containing a water-borne resin, a thiocarbonyl group-containing compound, phosphate ion, as well as a water dispersible silica. This system, however, was insufficient in the workability and adhesion to the underlying substrate in spite of the excellent corrosion resistance. With regard to silane coupling agent, Japanese Patent Application Laid-Open No. 8-73775 (Patent Document 2) discloses an acidic surface treating agent containing two types of silane coupling agents. Corrosion resistance of this system, however, is insufficient in the application wherein a high corrosion resistance and high workability are required after the metal surface treatment.

Along with these, Japanese Patent Application Laid-Open No. 2001-316845 (Patent Document 3) discloses a chromate-free metal surface treating agent containing a silane coupling agent, a water-dispersible silica, and zirconium or titanium ion for the critical components to thereby improve the corrosion resistance and workability. This metal surface treating agent, however, was insufficient, for example, in coating workability and adhesion strength with the overlying layer.

Japanese Patent Application Laid-Open No. 10-60315 (Patent Document 4) discloses a surface treating agent for steel structures containing a silane coupling agent having a particular functional group which reacts with an aqueous emulsion. The corrosion resistance required in this case, however, is merely the corrosion resistance that can endure a relatively mild test such as humidity test, and this case is not at all comparable to the anti-corrosive agent that should endure the harsh conditions as in the case of the present invention.

DE 10 2005 023 107 describes silane-modified polymeric amines with a weight average molecular weight of 10,000-1,000,000 g/mol in some cases having a polyethylene amine backbone and biocidal formulations including these polymers.

In view of the situation as described above, there is a strong demand for a metal surface treating agent which exhibits corrosion resistance, adhesion during the working, coating workability, adhesion strength, and other properties even if the surface treating agent were coated to form a thin film.

The present invention has been completed in view of the situation as described above, and an object of the present invention is to provide a chromate-free metal surface treating agent which is well adapted for coating a metal, and in particular, a metal-coated steel material, and which provides excellent workability, adhesion, and corrosion resistance when used as a pretreatment before providing an overcoat, for example, by applying a coating composition. Another object of the invention is to provide a steel material which has been treated with such surface treating agent, and a method for treating a metal surface with such surface treating agent. A further object of the invention is to provide a coated steel material having an overcoat formed on the surface treated steel material, and its production method.

In order to realize such objects, the inventors of the present invention made an intensive study and found that a metal surface treating agent which is free from chromium but which exhibits excellent corrosion resistance, adhesion during the working, coating workability, and adhesion strength can be produced when an organic polymer having two or more amino groups which is effective in providing the corrosion resistance as well as a reactive silyl group which bonds to the substrate metal surface by methsiloxane bond is incorporated as a critical component of the metal surface treating agent.

Accordingly, the present invention provides a metal surface treating agent; a surface treated steel material and the surface treating method; as well as a coated steel material and its production method as described in the claims.

EFFECTS

Metal surface treating agents embodying the present invention contain said organic polymer having amino groups which are effective in providing the corrosion resistance as well as reactive groups, typically represented by silyl group, which firmly bond to the substrate metal surface, as its basic skeleton. This component contributes to the corrosion resistance, adhesion during working and adhesion strength, while presence of the polymer unit contributes for the improved coating workability.

FURTHER EXPLANATIONS; OPTIONS AND PREFERENCES

Next, the present invention is described in detail.
The metal surface treating agent of the present invention comprises a compound containing all of the following structures (a) to (c):

(a) a straight chain and/or branched organic polymer skeleton formed by carbon - carbon bond optionally containing nitrogen atom between the carbon - carbon bond;
(b) a primary, secondary, or tertiary amino group; and
(c) a silyl group having a hydrolyzable group and/or hydroxy group bonded by silicon - carbon bond

in one molecule and/or its (partial) condensation product as its critical component, and in the metal surface treating agent of the present invention, this critical component is dissolved in water and/or an organic solvent.
The structure (a) is a polymethylene polymer skeleton containing 20 to 800 carbon atoms or a polyethyleneimine skeleton containing 20 to 800 carbon atoms.
The structure (c) is preferably a hydrolyzable silyl group represented by the following formula:

$$-SiR_xZ_{3-x}$$

wherein R is independently an alkyl group containing 1 to 4 carbon atoms such as methyl group, ethyl group, n-propyl group, i-propyl group, n-butyl group, i-butyl group, and t-butyl group; Z is a halogen atom such as chlorine atom; an alkoxy group containing 1 to 4 carbon atoms such as methoxy group, ethoxy group, n-propoxy group, i-propoxy group, n-butoxy group, and t-butoxy group, or an acetoxy group, and x is an integer of 0 to 2.
The compound containing the structures (a) to (c) as described above which are for use in the present invention include at least one member selected from the group consisting of the water-soluble silicon-containing polymer compound having two or more primary amino groups and hydrolyzable silyl group and/or silanol group having the constitutional repeating unit represented by the following general formulae (1) to (6):

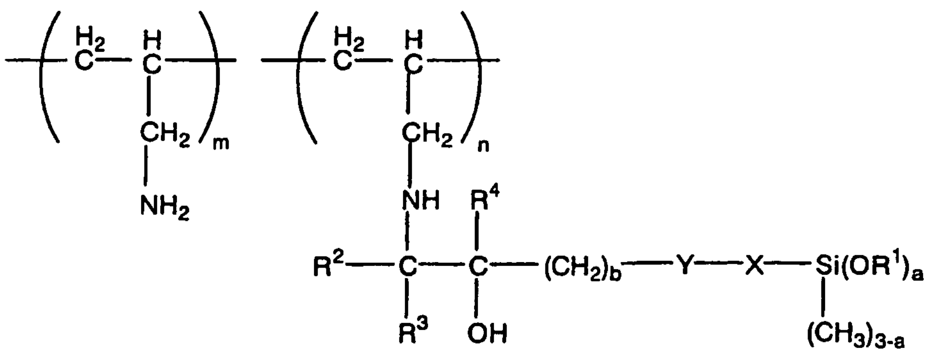

(1)

wherein m is $10 \leq m \leq 260$; n is $1 \leq n \leq 100$; $R^1$ is hydrogen atom, an alkyl group containing 1 to 4 carbon atoms, or an acetyl group; a and b are an integer of 1 to 3; X is an alkylene group containing 1 to 10 carbon atoms optionally substituted with an alkyl group containing 1 to 6 carbon atoms; Y is direct bond, oxygen atom, or a $CHR^5$ group wherein $R^2$, $R^3$, $R^4$, and $R^5$ are independently hydrogen atom or an alkyl group containing 1 to 6 carbon atoms, wherein $R^3$ or $R^4$ and $R^5$ may together represent a saturated carbon ring;

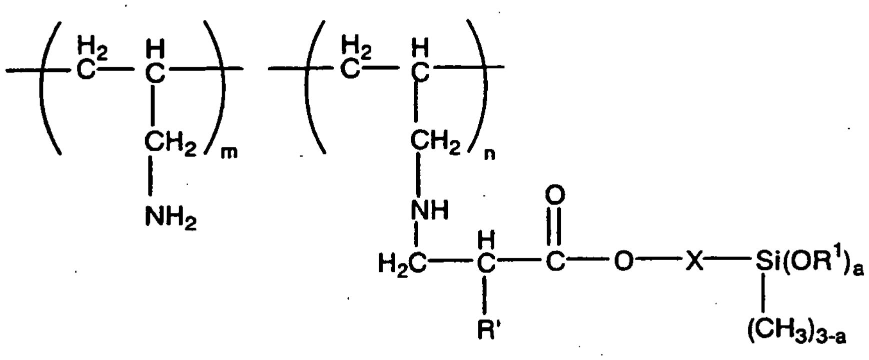

(2)

wherein m is $10 \leq m \leq 260$; n is $1 \leq n \leq 100$; X is an alkylene group containing 1 to 10 carbon atoms optionally substituted with an alkyl group containing 1 to 6 carbon atoms; $R^1$ is hydrogen atom, an alkyl group containing 1 to 4 carbon atoms, or an acetyl group; R' is hydrogen atom or methyl group; and a is an integer of 1 to 3;

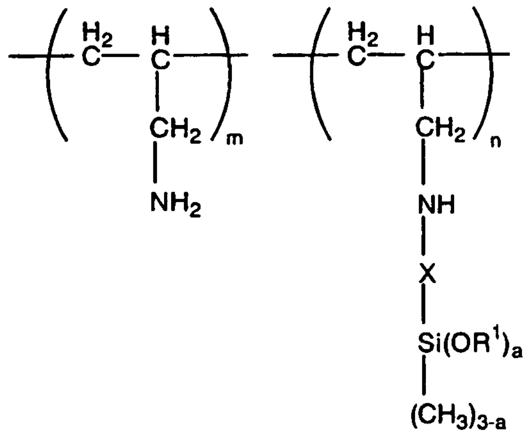

(3)

wherein m is $10 \leq m \leq 260$, n is $1 \leq n \leq 100$, X is an alkylene group containing 1 to 10 carbon atoms optionally substituted with an alkyl group containing 1 to 6 carbon atoms; $R^1$ is hydrogen atom, an alkyl group containing 1 to 4 carbon atoms, or an acetyl group; and a is an integer of 1 to 3:

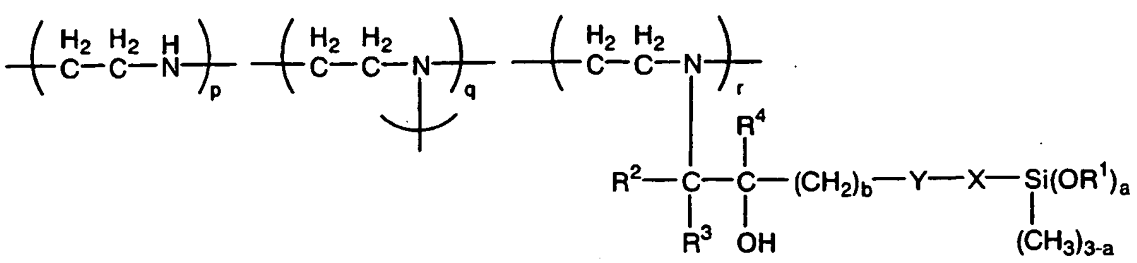

(4)

wherein p is $10 \leq p \leq 200$; q is $1 \leq q \leq 200$; r is $1 \leq r \leq 100$; $R^1$ is hydrogen atom, an alkyl group containing 1 to 4 carbon atoms, or an acetyl group; a and b are an integer of 1 to 3; X is an alkylene group containing 1 to 10 carbon atoms optionally substituted with an alkyl group containing 1 to 6 carbon atoms; Y is a direct bond, oxygen atom, or a $CHR^5$ group; $R^2$, $R^3$, $R^4$, and $R^5$ are independently hydrogen atom or an alkyl group containing 1 to 6 carbon atoms wherein

$R^3$ or $R^4$ and $R^5$ may together represent a saturated carbon ring;

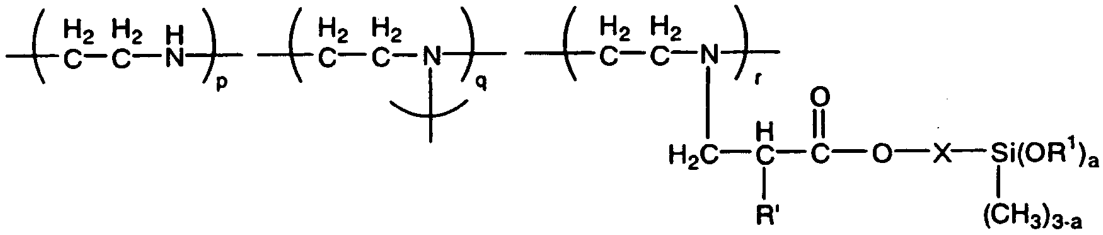

(5)

wherein p is $10 \leq p \leq 200$; q is $1 \leq q \leq 200$; r is $1 \leq r \leq 100$; X is an alkylene group containing 1 to 10 carbon atoms optionally substituted with an alkyl group containing 1 to 6 carbon atoms; $R^1$ is hydrogen atom, an alkyl group containing 1 to 4 carbon atoms, or an acetyl group; R' is hydrogen atom or methyl group; a is an integer of 1 to 3.

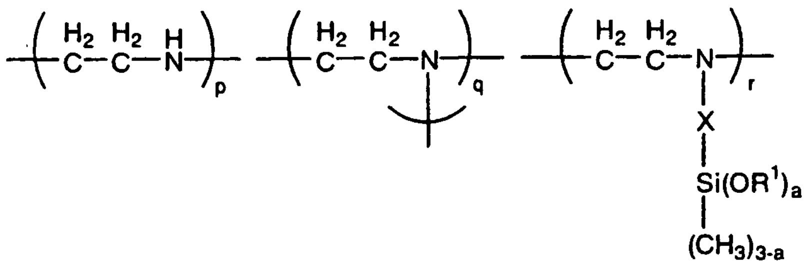

(6)

wherein p is $10 \leq p$ s 200; q is $1 \leq q \leq 200$; r is $1 \leq r \leq 100$; X is an alkylene group containing 1 to 10 carbon atoms optionally substituted with an alkyl group containing 1 to 6 carbon atoms; $R^1$ is hydrogen atom, an alkyl group containing 1 to 4 carbon atoms, or an acetyl group; and a is an integer of 1 to 3.

In the above formula, $R^1$ is a hydrogen atom, an alkyl group containing 1 to 4 carbon atoms, or an acetyl group; an alkyl group containing 1 to 4 carbon atoms may be methyl group, ethyl group, n-propyl group, i-propyl group, n-butyl group, i-butyl group, or t-butyl group.

X is an alkylene group containing 1 to 10 carbon atoms such as methylene group, ethylene group, propylene group, butylene group, pentylene group, hexylene group, heptylene group, or octylene group optionally substituted with an alkyl group containing 1 to 6 carbon atoms such as methyl group, ethyl group, n-propyl group, i-propyl group, n-butyl group, i-butyl group, t-butyl group, pentyl group, i-pentyl group, or hexyl group.

Y represents a direct bond, oxygen atom, or a $CHR^5$, wherein $R^2$, $R^3$, $R^4$, and $R^5$ are independently hydrogen atom or an alkyl group containing 1 to 6 carbon atoms such as methyl group, ethyl group, n-propyl group, i-propyl group, n-butyl group, i-butyl group, t-butyl group, pentyl group, i-pentyl group, or hexyl group, wherein $R^3$ or $R^4$ may together with $R^5$ form a saturated carbon ring containing 3 to 7 carbon atoms together with the carbon atom and the $(CH_2)_b$ (and when $R^3$ and $R^5$ together form such carbon ring, further with $CR^4OH$).

a and b are an integer of 1 to 3.

The polymer compounds represented by the formulae (1) to (6) are terminated by hydrogen atom.

In the case of the above formula (1) to (3), m and n are respectively $10 \leq m \leq 260$, and $1 \leq n \leq 100$; and preferably $10 \leq m \leq 100$ and $1 \leq n \leq 80$; and more preferably $10 \leq m \leq 75$ and $1 \leq n \leq 50$. When m and n are $260 < m$ or $100 < n$, the molecular weight will be excessively high, and the viscosity will be unduly high in the course of synthesizing the compound, and there is a risk that the stable production can not be accomplished. When $m < 10$, and in particular, when $m = 0$, there is a risk that solubility in water may be insufficient. Furthermore, when $n < 1$, the resulting product may exhibit insufficient adhesion with inorganic materials.

In the formulae (1) to (3), m and n respectively represent the number of the allylamine unit and the unit wherein the allylamine has reacted with the silane in the molecule; and the ratio of m to n corresponds to the ratio of the primary amino group to the silyl group in the molecule. In the compound of the present invention, the ratio of the polyallylamine base polymer to the silane coupling agent which has reacted with the polyallylamine base polymer represented in terms of the amount (m) of the silyl group introduced and the amount (n) of the amino group introduced is preferably such that $0.003 \leq n/(m+n) \leq 0.9$, and more preferably, $0.06 \leq n/(m+n) \leq 0.5$. When the ratio is below such range, the resulting

product may exhibit insufficient adhesion to the steel material, while an excessive large ratio results in an insufficient solubility, and thus, in the difficulty of producing the metal surface treating agent.

In the case of formulae (4) to (6), p, q, and r are respectively $10 \leq p \leq 200$, $1 \leq q \leq 200$, and $1 \leq r \leq 100$, preferably $10 \leq p \leq 100$, $10 \leq q \leq 100$, and $1 \leq r \leq 80$, and more preferably $10 \leq p \leq 75$, $10 \leq q \leq 75$, $1 \leq r \leq 50$. When p and r are $200 < p$ or $100 < r$, the molecular weight will be high, and because of the resulting excessively high viscosity in the course of synthesizing the compound, stable production may not be realized. When $p < 10$, and in particular, when $p = 0$, solubility in water may become insufficient. When $q < 1$, not only the solubility in water, but also adhesion to the underlying material may become insufficient. Furthermore, when $r < 1$, adhesion to inorganic materials may be insufficient.

In the formulae (4) to (6), p, q, and r respectively represent the number of ethyleneimine units (residues) and units wherein the ethyleneimine has reacted with the silane in the molecule; and the ratio of p to r corresponds to the ratio of the secondary amino group to the silyl group in the molecule. Index q can represent the degree of branching. In the compound as proposed herein, the ratio of the polyethyleneimine base polymer to the silane coupling agent which has reacted with the polyethyleneimine base polymer represented in terms of the amount (r) of the silyl group introduced and the amount (p) of remaining secondary amino group is preferably such that $0.003 \leq r/(p+r) \leq 0.9$, and more preferably $0.06 \leq r/(p+r) \leq 0.5$. When the ratio is below such range, the resulting product may exhibit insufficient adhesion to the steel material, while an excessive large ratio results in an insufficient solubility, and thus, in the difficulty of producing the metal surface treating agent.

In the present invention, the compound as described above may preferably have a weight average molecular weight of 300 to 3000, and more preferably 1000 to 2000. When the molecular weight is in excess of 3000, the compound is likely to gelate, and production and storage of the metal surface treating agent may become difficult. When the molecular weight is less than 300, the polymerization will be uncontrollable, and the synthesis of the polymer itself may become difficult. In the present invention, the weight average molecular weight is the value determined by gel permeation chromatography (GPC) represented in terms of polystyrene (and this applies to the following description).

In the present invention, the compound is dissolved in water and/or an organic solvent, and the metal surface treating agent is in liquid form. Concentration of the compound in the metal surface treating agent is typically 0.01 to 200 g in 1 liter of the metal surface treating agent 1 (which is hereinafter expressed as "0.01 to 200 g/L"), and preferably 0.05 to 100 g/L. When the content of the compound is less than 0.01 g/L, corrosion resistance, adhesion to the primer, adhesion strength, and coating workability may be reduced, and a content in excess of 200 g/L may result in the effect saturation, and such addition may be economically disadvantageous.

The remainder may comprise water and/or the organic solvent used for dissolving the compound. Exemplary organic solvents include alcohols such as methanol and ethanol and amide solvents such as form amide and N,N-dimethylformamide, and the most preferred are methanol and ethanol. However, the solvent may be other than those mentioned above.

The metal surface treating agent of the present invention may further comprise a water dispersible silica. The type of this water dispersible silica is not particularly limited, and the preferred are a spherical silica, a chain silica, and an aluminum-modified silica which are weakly acidic and which contain a reduced amount of impurities such as sodium. Exemplary spherical silicas include colloidal silicas such as "SNOWTEX N" and "SNOWTEX UP" which are both products of Nissan Chemical), and fumed silica such as "Aerosil" manufactured by Nippon Aerosil Co. , Ltd.). Exemplary chain silicas include silica gels such as "PS" (manufactured by Nissan Chemical), and exemplary aluminum-modified silicas include commercially available silica gel such as "Adelite AT-20A" manufactured by Adeka Corporation.

The water-dispersible silica is preferably incorporated in the metal surface treating agent at a solid content of 0.05 to 100 g/L, and in particular, at 0.5 to 60 g/L. When the content of the water-dispersible silica is less than 0.05 g/L, improvement in the corrosion resistance may be insufficient, and the content in excess of 100 g/L may result in the failure of improving the corrosion resistance, and quite contrary, in the loss of bath stability of the metal surface treating agent.

The metal surface treating agent of the present invention may further comprise a zirconium compound and/or a titanium compound. Exemplary zirconium compounds include ammonium zirconium carbonate, zirconium hydrofluorinate, zirconium ammonium fluorinate, zirconium potassium fluoride, zirconium sodium fluoride, zirconium acetylacetonate, zirconium butoxide 1-butanol solution, and zirconium n-propoxide. Exemplary titanium compounds include titanium hydrofluorinate, titanium ammonium fluorinate, titanium potassium oxalate dihydrate, titanium isopropoxide, isopropyl titanate, titanium ethoxide, titanium-2-ethyl-1-hexanolate, tetraisopropyl titanate, tetra-n-butyl titanate, titanium potassium fluoride, and titanium sodium fluoride. The compound as mentioned above may be used alone or in combination of two or more.

The zirconium compound and/or the titanium compound is preferably incorporated in the metal surface treating agent respectively at the zirconium ion content or the titanium ion content of 0.01 to 50 g/L, and in particular, 0.05 to 5 g/L. When the content of each of these compounds is less than 0.01 g/L, the corrosion resistance may be insufficient while the content in excess of 50 g/L may result in the failure of improving the coating adhesion during the working, and loss of bath stability.

The metal surface treating agent of the present invention may further comprise a thiocarbonyl group-containing

compound. Exemplary such thiocarbonyl compounds include thiourea, dimethyllthiourea, 1,3-dimethyllthiourea, dipropylthiourea, dibutylthiourea, 1,3-diphenyl-2-thiourea, 2,2-ditolylthiourea, thioacetamide, sodium dimethyldithiocarbamate, tetramethylthiuram monosulfide, tetrabutylthiuram disulfide, zinc N-ethyl-N-phenyldithiocarbamate, zinc dimethyldithiocarbamate, piperidine pentamethylenedithiocarbamate, zinc diethyldithiocarbamate, zinc diethyldithiocarbamate, zinc isopropylxanthogenate, ethylenethiourea, dimethylxanthogen sulfide, dithiooxamide, polydithiocarbamic acid or its salt, and other compounds having at least one thiocarbonyl group, which may be used alone or in combination of two or more.

The thiocarbonyl group-containing compound may be incorporated in the metal surface treating agent of the present invention at a concentration of 0.01 to 100 g/L, and in particular, at 0.1 to 10 g/L. When the content is less than 0.01 g/L, improvement in the corrosion resistance may become insufficient, whereas incorporation in excess of 100 g/L may result in the saturated improvement of the corrosion resistance, and such saturation is economically disadvantageous.

The metal surface treating agent of the present invention may further comprise a water-soluble acrylic resin. Exemplary such water-soluble acrylic resins include copolymers primarily comprising an acrylic acid and/or methacrylic acid monomer such as methyl acrylate, ethyl acrylate, methyl methacrylate, or ethyl methacrylate as well as their derivatives and copolyemrs with other acrylic monomers. More specifically, content of the acrylic acid and/or the methacrylic acid monomer is at least 70%.

The acrylic resin may preferably have a weight average molecular weight of at least 10,000, and more preferably, 300,000 to 2,000,000. When the weight average molecular weight is in excess of 2,000,000, viscosity will be too high and the handling convenience may be insufficient. At less than 10,000, the effects as described above may not be sufficiently improved.

The acrylic resin is preferably incorporated at a concentration of 0.1 to 100 g/L, and in particular, at 5 to 80 g/L in the metal surface treating agent. When the concentration of the acrylic resin is less than 0.1 g/L, the effect of improving the adhesion after bending and the deep drawability will be insufficient, and when the concentration is in excess of 100 g/L, the effect of improving the adhesion after bending and the deep drawability will be saturated, which is economically disadvantageous.

Corrosion resistance of the metal surface treating agent of the present invention can be further improved by adding a phosphate ion. Such addition of the phosphate ion can be accomplished by adding a compound which is capable of forming a phosphate ion in water. Exemplary such compounds include phosphoric acid, phosphates such as $Na_3PO_4$, $Na_2HPO_4$, and $NaH_2PO_4$ and condensed phosphoric acids such as condensed phosphoric acid, polyphosphoric acid, metaphosphoric acid, and diphosphoric acid and salts thereof, which may be used alone or in combination of two or more.

Such phosphate ion may be incorporated at a concentration of 0.01 to 100 g/L, and more preferably 0.1 to 10 g/L in the metal surface treating agent. When added at less than 0.01 g/L, the effect of improving the corrosion resistance may become insufficient, and an addition in excess of 100 g/L may induce excessive etching in the case of zinc or zinc alloy-plated steel material which may result in the loss of its performance, and such excessive addition of the phosphate ion may also induce gelation when a water-borne resin has been added as a component in the metal surface treating agent.

The metal surface treating agent of the present invention may also contain other components, for example, tannic acid or its salt, phytic acid or its salt, or a water-borne resin. Exemplary such resins include urethane resin, epoxy resin, ethylene - acryl copolymer, phenol resin, polyester resin, polyolefin resin, alkyd resin, and polycarbonate resin, which may be used alone or in combination of two or more, and which may also be incorporated after copolymerization. When such resin is used, an organic solvent may also be incorporated to facilitate the film formation, and to also facilitate a homogeneous film having an improved smoothness. Also allowable is incorporation of a leveling agent, a wetting agent, and a foaming agent.

The metal surface treating agent of the present invention is used as a surface treating agent for a cold rolled steel material, a hot rolled steel material, a stainless steel material, and steel materials such as an electrogalvanized steel material, a hot dip galvanized steel material, a zinc-aluminum alloy-plated steel material, a zinc-iron alloy-plated steel material, a zinc-magnesium alloy-plated steel material, a zinc-aluminum-magnesium alloy-plated steel material, an aluminum alloy-plated steel material, an aluminum-silicon alloy-plated steel material, a tin-plated steel material, a lead-tin alloy-plated steel material, a chromium-plated steel material, and a nickel-plated steel material. The metal surface treating agent of the present invention, however, is most effective when it is used for a metal-coated steel material (a plated steel material).

The method for using the surface treating agent, namely, the surface treating method may be a method wherein the metal surface treating agent is coated on the substrate material followed by drying, or alternatively, a method wherein the substrate is preliminarily heated, and the metal surface treating agent of the present invention is thereafter applied, and the drying is accomplished by the residual heat.

In either case, the drying may be accomplished at room temperature to 250°C in 2 seconds to 1 hour. A temperature in excess of 250°C may result in the loss of adhesion, corrosion resistance, and other performances.

Preferably, the drying may be accomplished at a temperature of 40 to 180° C for 5 seconds to 20 minutes. In this surface treating method, the coating weight of the metal surface treating agent of the present invention is at least 0.1 $mg/m^2$. A coating weight of less than 0.1 $mg/m^2$ may be insufficient for corrosion prevention whereas excessive coating is economically disadvantageous for use as a pretreatment before the overcoating. The coating weight is preferably in the range of 0.5 to 500 $mg/m^2$, and more preferably 1 to 250 $mg/m^2$.

In the surface treatment method as described above, the method used for coating the metal surface treating agent is not particularly limited, and the coating may be accomplished by the method commonly used in the art such as roll coating, shower coating, spraying, dipping, and brush coating. The steel material coated is any of the steel materials as described above, and the present surface treatment method is most suited for various plated steel materials.

The production method of the coated steel material of the present invention comprises the steps of surface treating the metal strip by the metal surface treating agent, drying, and subsequently applying an overcoat layer. Exemplary covercoats include coating systems formed by coating and drying a (desirably chromate-free) primer and thereafter applying a top coat; and functional coatings having the function of, for example, fingerprint resistance or lubricity. Such production methods may be used not only for pre-coating steel material, but also for post-coating steel materials, and in the present invention, the term "coated steel material" includes both of these steel materials. In the present invention, the "steel material" is an idea which includes "steel strip".

The chromate-free primers which can be used in the present invention include all primers prepared without using a chromate-based rust preventive pigment. Preferable examples of such primer include a primer (V/P pigment primer) prepared by using a vanadic acid-based rust preventive pigment and a phosphoric acid-based rust preventive pigment, and a primer prepared by using a calcium silicate rust preventive pigment and.

The primer may coated to a dry thickness of 1 to 20 μm. When the dry thickness is less than 1 μm, the corrosion resistance may become insufficient whereas the dry thickness in excess of 20 μm may result in the loss of adhesion during the working.

The chromate-free primer may be baked and dried at a metal surface temperature of 150 to 250°C for 10 seconds to 5 minutes.

The top coat is not particularly limited, and any of the top coats commonly used in the art may be used in the present invention. Also, the functional coating is not particularly limited, and all functional coatings currently used with the underlying chromate pretreatment film are applicable. The method used for applying the chromate-free primer, the topcoat, and the functional coating is not particularly limited, and any of the roll coating, shower coating, air spraying, dipping, and the like commonly used in the art are applicable.

## EXAMPLES

Next, the present invention is described in detail by referring to Synthetic Examples, Examples, and Comparative Examples which by no means limit the scope of the present invention. In these Examples, the pH and the viscosity were measured at 25° C, and "GC" is the abbreviation of gas chromatography, and "NMR" is the abbreviation of nuclear magnetic resonance spectroscopy. The average molecular weight is the weight average molecular weight measured by GPC expressed in terms of polystyrene, and the viscosity if the one measured by a Type B rotary viscometer at 25°C.

### Synthetic Example 1

Moisture was removed from 500.0 parts by weight of 15% by weight aqueous solution of polyallylamine [PAA-01 manufactured by Nitto Boseki Co., Ltd. having an average molecular weight of 1000] under reduced pressure, and methanol was added for solvent exchange to prepare a 15% by weight methanol solution. To this solution was added 77.9 parts by weight (0.33 mole) of 3-glycidoxypropyltrimethoxysilane, and the mixture was stirred at 60°C to 70°C for 5 hours. Since the 3-glycidoxypropyltrimethoxysilane (the starting material) is consumed with the progress of the solution, the solution was measured by gas chromatography, and no peak of the 3-glycidoxypropyltrimethoxysilane (the starting material) was detected. When silicon was measured by NMR, the signal detected was not the signal of the 3-glycidoxypropyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and this solution had a pH of 11.7, a viscosity of 2.7 mPa·s, a degree of polymerization of the base polymer moiety of about 17, and the following average structural formula:

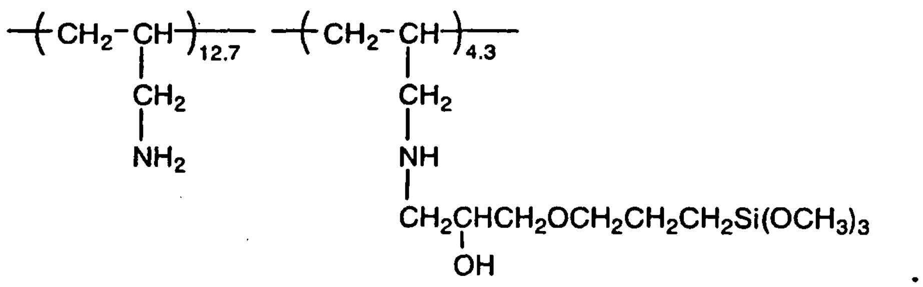

Synthetic Example 2

Moisture was removed from 500.0 parts by weight of 20% by weight aqueous solution of polyallylamine [average molecular weight, 2500 under reduced pressure, and methanol was added for solvent exchange to prepare a 15% by weight methanol solution. To this solution was added 101.5 parts by weight (0.43 mole) of 3-glycidoxypropyltrimethoxysilane, and the mixture was stirred at 60°C to 70°C for 5 hours. Since the 3-glycidoxypropyltrimethoxysilane (the starting material) is consumed with the progress of the solution, the solution was measured by gas chromatography, and no peak of the 3-glycidoxypropyltrimethoxysilane (the starting material) was detected. When silicon was measured by NMR, the signal detected was not the signal of the 3-glycidoxypropyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and this solution had a pH of 11.6, a viscosity of 15.1 mPa·s, a degree of polymerization of the base polymer moiety of about 44, and the following average structural formula:

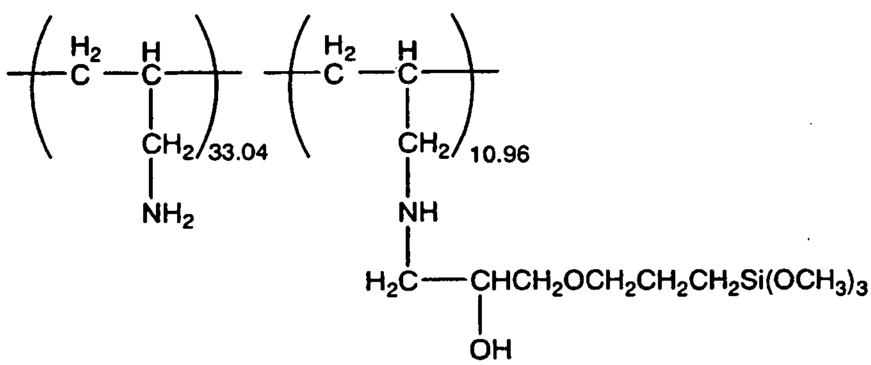

Synthetic Example 3

Moisture was removed from 500.0 parts by weight of 20% by weight aqueous solution of polyallylamine [average molecular weight, 700] under reduced pressure, and methanol was added for solvent exchange to prepare a 15% by weight methanol solution. To this solution was added 99.1 parts by weight (0.42 mole) of 3-glycidoxypropyltrimethoxysilane, and the mixture was stirred at 60°C to 70°C for 5 hours. Since the 3-glycidoxypropyltrimethoxysilane (the starting material) is consumed with the progress of the solution, the solution was measured by gas chromatography, and no peak of the 3-glycidoxypropyltrimethoxysilane (the starting material) was detected. When silicon was measured by NMR, the signal detected was not the signal of the 3-glycidoxypropyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and this solution had a pH of 11.8, a viscosity of 1.9 mPa·s, a degree of polymerization of the base polymer moiety of about 12, and the following average structural formula:

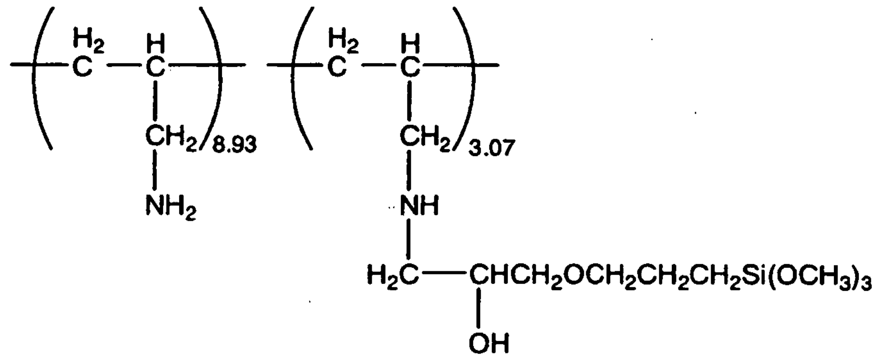

Synthetic Example 4

Moisture was removed from 500.0 parts by weight of 15% by weight aqueous solution of polyallylamine [PAA-01 manufactured by Nitto Boseki Co., Ltd. having an average molecular weight of 1000] under reduced pressure, and methanol was added for solvent exchange to prepare a 15% by weight methanol solution. To this solution was added 81.2 parts by weight (0.33 mole) of 2-(3,4-epoxycyclohexyl)ethyltrimethoxysilane, and the mixture was stirred at 60°C to 70°C for 5 hours. Since the 2-(3,4-epoxycyclohexyl)ethyltrimethoxysilane (the starting material) is consumed with the progress of the solution, the solution was measured by gas chromatography, and no peak of the 2-(3,4-epoxycyclohexyl) ethyltrimethoxysilane (the starting material) was detected. When silicon was measured by NMR, the signal detected was not the signal of the 2-(3,4-epoxycyclohexyl)ethyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and this solution had a pH of 11.5, a viscosity of 3.5 mPa·s, a degree of polymerization of the base polymer moiety of about 17, and the following average structural formula:

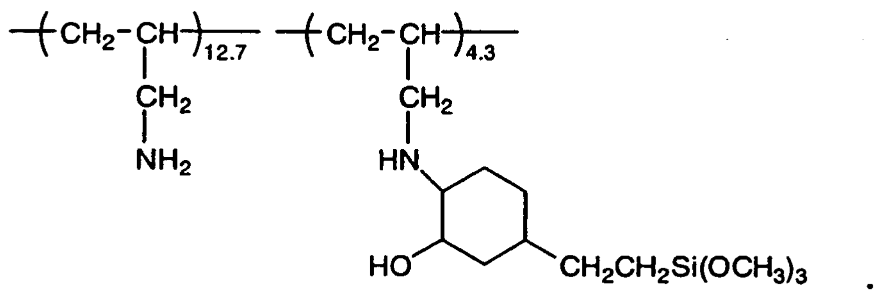

Synthetic Example 5

Moisture was removed from 500.0 parts by weight of 15% by weight aqueous solution of polyallylamine [PAA-01 manufactured by Nitto Boseki Co., Ltd. having an average molecular weight of 1000] under reduced pressure, and methanol was added for solvent exchange to prepare a 15% by weight methanol solution. To this solution was added 77.2 parts by weight (0.33 mole) of 3-acryloxypropyltrimethoxysilane, and the mixture was stirred at 60°C to 70°C for 5 hours. Since the 3-acryloxypropyltrimethoxysilane (the starting material) is consumed with the progress of the solution, the solution was measured by gas chromatography, and no peak of the 3-acryloxypropyltrimethoxysilane (the starting material) was detected. When silicon was measured by NMR, the signal detected was not the signal of the 3-acryloxypropyltrimethoxysilane but the signal presumably of the target compound. Based on the information as described above, the reaction was confirmed to have been completed, and the solution was diluted with methanol to adjust the content of the effective component to 15% by weight. This solution was a yellow transparent solution which was quickly miscible with water, and this solution had a pH of 11.7, a viscosity of 2.7 mPa·s, a degree of polymerization of the base polymer moiety of about 17, and the following average structural formula:

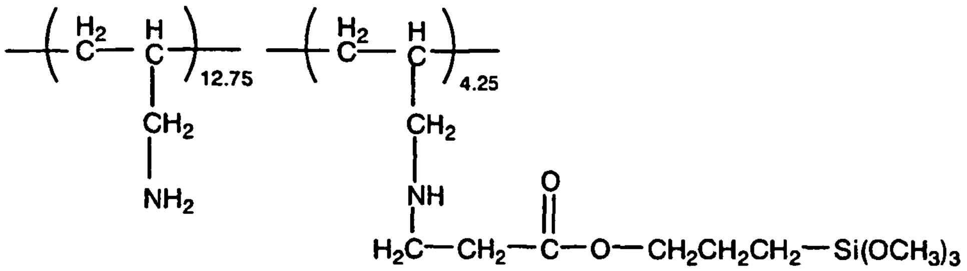

Synthetic Example 6

Moisture was removed from 500.0 parts by weight of 15% by weight aqueous solution of polyallylamine [PAA-01 manufactured by Nitto Boseki Co., Ltd. having an average molecular weight of 1000] under reduced pressure, and methanol was added for solvent exchange to prepare a 15% by weight methanol solution. To this solution was added 65.5 parts by weight (0.33 mole) of 3-chloropropyltrimethoxysilane, and the mixture was stirred at 60°C to 70°C for 40 hours. Since the chloro ion content in the reaction solution increases by the hydrochloric acid formed with the progress of the reaction, the solution was measured by potentiometric titration using silver nitrate for its chloro ion content. The chloro ion content of the solution was 2.0% by weight, which was the same as the amount of the chloro ion that would have generated at the completion of the reaction, and the completion of the reaction was thereby confirmed. When this solution was measured by gas chromatography, no peak of the 3-chloropropyltrimethoxysilane (the starting material) was detected. When silicon was measured by NMR, the signal detected was not the signal of the 3-chloropropyltrimethoxysilane but the signal presumably of the target compound. Based on the information as described above, the reaction was confirmed to have been completed. To this solution, 17.82 parts by weight (0.33 mole) of sodium methylate was further added, and the mixture was stirred at 60° C to 70° C for 1 hour to convert amine hydrochloride in the solution to sodium chloride. The precipitated sodium chloride was separated by filtration, and the filtrate was diluted with methanol to adjust the content of the effective component to 15% by weight. This solution was a yellow transparent solution which was quickly miscible with water, and this solution had a pH of 12.2, a viscosity of 8.6 mPa·s, and a content of the chloro ion from the sodium chloride of 0.5% by weight, a degree of polymerization of the base polymer moiety of about 17, and the following average structural formula:

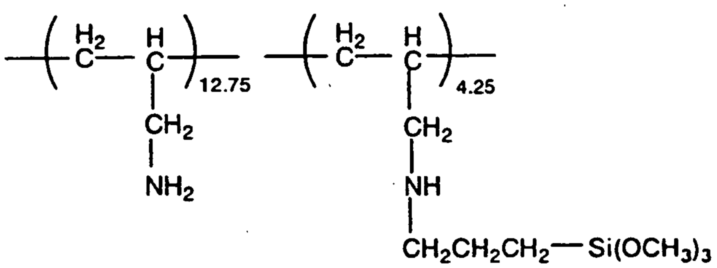

Synthetic Example 7

Moisture was removed from 500.0 parts by weight of 15% by weight aqueous solution of polyallylamine [PAA-01 manufactured by Nitto Boseki Co., Ltd. having an average molecular weight of 1000] under reduced pressure, and methanol was added for solvent exchange to prepare a 15% by weight methanol solution. To this solution was added 32.8 parts by weight (0.17 mole) of 3-chloropropyltrimethoxysilane, and the mixture was stirred at 60°C to 70°C for 40 hours. Since the chloro ion content in the reaction solution increases by the hydrochloric acid formed with the progress of the reaction, the solution was measured by potentiometric titration using silver nitrate for its chloro ion content. The chloro ion content of the solution was 1.0% by weight, which was the same as the amount of the chloro ion that would have generated at the completion of the reaction, and the completion of the reaction was thereby confirmed. When this solution was measured by gas chromatography, no peak of the 3-chloropropyltrimethoxysilane (the starting material) was detected. When silicon was measured by NMR, the signal detected was not the signal of the 3-chloropropyltrimethoxysilane but the signal presumably of the target compound. Based on the information as described above, the reaction was confirmed to have been completed. To this solution, 8.9 parts by weight (0.17 mole) of sodium methylate was further added, and the mixture was stirred at 60°C to 70°C for 1 hour to convert amine hydrochloride in the solution to sodium chloride. The precipitated sodium chloride was separated by filtration, and the filtrate was diluted with methanol to adjust the content of the effective component to 15% by weight. This solution was a yellow transparent solution which was quickly miscible with water, and this solution had a pH of 12.3, a viscosity of 2.1 mPa·s, and a content of the chloro ion from the sodium chloride of 0.4% by weight, a degree of polymerization of the base polymer moiety of about 17, and the following average structural formula:

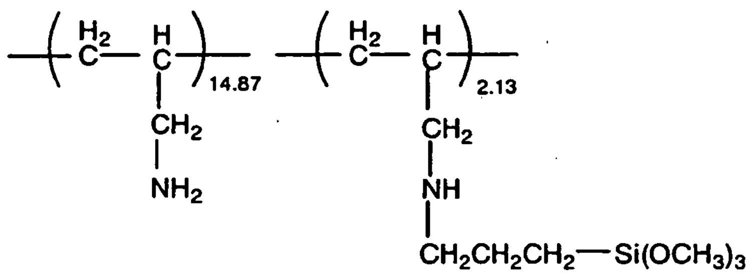

Synthetic Example 8

75.0 parts by weight of polyethyleneimine [average molecular weight, 1000] was dissolved in methanol to prepare a 15% by weight methanol solution. To this solution was added 77.9 parts by weight (0.33 mole) of 3-glycidoxypropyltrimethoxysilane, and the mixture was stirred at 60°C to 70°C for 5 hours. Since the 3-glycidoxypropyltrimethoxysilane (the starting material) is consumed with the progress of the solution, the solution was measured by gas chromatography, and no peak of the 3-glycidoxypropyltrimethoxysilane (the starting material) was detected. When silicon was measured by NMR, the signal detected was not the signal of the 3-glycidoxypropyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and this solution had a pH of 11.1, a viscosity of 2.1 mPa·s, a degree of polymerization of the base polymer moiety of about 23, and the following average structural formula:

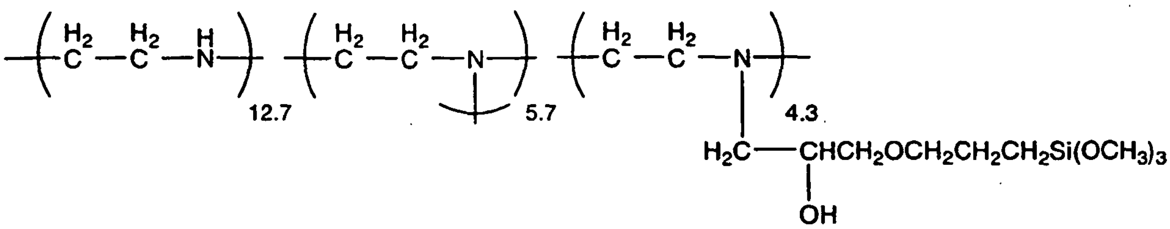

Synthetic Example 9

75.0 parts by weight of polyethyleneimine [average molecular weight, 1000] was dissolved in methanol to prepare a 15% by weight methanol solution. To this solution was added 77.9 parts by weight (0.33 mole) of 3-acryloxypropyltrimethoxysilane, and the mixture was stirred at 60°C to 70°C for 5 hours. Since the 3-acryloxypropyltrimethoxysilane (the starting material) is consumed with the progress of the solution, the solution was measured by gas chromatography, and no peak of the 3-acryloxypropyltrimethoxysilane (the starting material) was detected. When silicon was measured by NMR, the signal detected was not the signal of the 3-acryloxypropyltrimethoxysilane but the signal presumably of the target compound. Based on the information as described above, the reaction was confirmed to have been completed, and the solution was diluted with methanol to adjust the content of the effective component to 15% by weight. The resulting primer composition was a yellow transparent solution which was quickly miscible with water, and

this solution had a pH of 10.9, a viscosity of 1.8 mPa·s, a degree of polymerization of the base polymer moiety of about 23, and the following average structural formula:

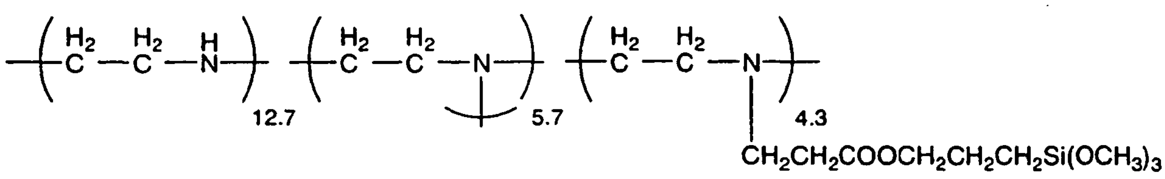

Synthetic Example 10

75.0 parts by weight of polyethyleneimine [average molecular weight, 1000] was dissolved in methanol to prepare a 15% by weight methanol solution. To this solution was added 65.5 parts by weight (0.33 mole) of 3-chloropropyltrimethoxysilane, and the mixture was stirred at 60° C to 70° C for 40 hours. Since the chloro ion content in the reaction solution increases by the hydrochloric acid formed with the progress of the reaction, the solution was measured by potentiometric titration using silver nitrate for its chloro ion content. The chloro ion content of the solution was 2.0% by weight, which was the same as the amount of the chloro ion that would have generated at the completion of the reaction, and the completion of the reaction was thereby confirmed. When this solution was measured by gas chromatography, no peak of the 3-chloropropyltrimethoxysilane (the starting material) was detected. When silicon was measured by NMR, the signal detected was not the signal of the 3-chloropropyltrimethoxysilane but the signal presumably of the target compound. Based on the information as described above, the reaction was confirmed to have been completed. To this solution, 17.82 parts by weight (0.33 mole) of sodium methylate was further added, and the mixture was stirred at 60°C to 70°C for 1 hour to convert amine hydrochloride in the solution to sodium chloride. The precipitated sodium chloride was separated by filtration, and the filtrate was diluted with methanol to adjust the content of the effective component to 15% by weight. This solution was a yellow transparent solution which was quickly miscible with water, and this solution had a pH of 11. 2 , a viscosity of 5.6 mPa·s, and a content of the chloro ion from the sodium chloride of 0.1% by weight, a degree of polymerization of the base polymer moiety of about 23, and the following average structural formula:

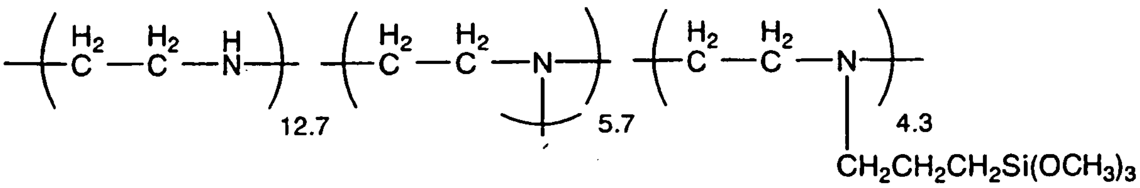

Example 1

To 1 liter of pure water was added 10 g of the polymer compound produced in Synthetic Example 1 as an involatile component, and the mixture was stirred at room temperature for 5 minutes to prepare the metal surface treating agent. The resulting metal surface treating agent was coated on a commercially available hot dip galvanized steel strip (manufactured by Nippon Testpanel Co., Ltd.; 70 × 150 × 0.4 mm) which had been degreased and dried with bar coater No. 20, and the coating was dried at a metal surface temperature of 105°C for 10 minutes. A chromate-free primer containing V/P pig was then coated with bar coater No. 16 to a dry thickness of 5 μm, and the coating was dried at a metal surface temperature of 215° C for 5 minutes. Furthermore, a top coat was deposited by coating FLEKICOAT 1060 (a polyester over coat composition manufactured by Nippon Paint Co., Ltd.) by bar coater No. 36 to a dry thickness of 15 μm, and the coating was dried at a metal surface temperature of 230°C to produce the test plate. The resulting test plate was evaluated for its adhesion after bending and corrosion resistance by the method as described below. The results are shown in Table 1.

Examples 2 to 15 and Comparative Examples 1 to 3

The procedure of Example 1 was repeated by changing the type of the compound produced in the Synthetic Example, type and the concentration of the silane compound, the water-dispersible silica, the zirconium ion, the thiocarbonyl group-containing compound, the water-soluble acrylic resin, and concentration of the phosphoric acid as shown in Table 1 to thereby produce a metal surface treating agent. Test plates were prepared by using these metal surface treating agent by repeating the procedure of Example 1, and the thus produced test plates were evaluated. The results are shown in Table 1.

Comparative Example 4

The procedure of Example 1 was repeated except that the metal surface treating agent was replaced with a commercially available coating-type chromate treating agent (the type containing a resin) which was coated to a chromium coating weight of 20 mg/$m^2$, and the chromium-containing primer (a primer containing a strontium chromate pigment) to produce and evaluate the test plate. The results are shown in Table 1.

## Table 1

| | No. | Composition of the metal surface treating agent | | | | | | | Adhesion after bending | Deep drawability | Corrosion resistance (1) | |
|---|---|---|---|---|---|---|---|---|---|---|---|---|
| | | Silane compound | | Silica | Zirconium ion | Thiocarbonyl group-containing compound | Acryl resin | Phosphate ion | | | | |
| | | Type | g/l | g/l | g/l | g/l | g/l | g/l | | | Cross cuts | Edges |
| Example | 1 | Synthetic Example 1 | 10 | - | - | - | - | - | A | B | A | A |
| | 2 | Synthetic Example 1 | 10 | - | - | - | - | 0.5 | A | B | A | A |
| | 3 | Synthetic Example 1 | 10 | 1 | - | - | - | 0.5 | A | B | A | A |
| | 4 | Synthetic Example 1 | 10 | 1 | 0.5 | - | - | 0.5 | A | B | A | A |
| | 5 | Synthetic Example 1 | 10 | 1 | 0.5 | 2.5 | - | 0.5 | A | B | A | A |
| | 6 | Synthetic Example 1 | 10 | 1 | 0.5 | 2.5 | 25 | 0.5 | A | A | A | A |
| | 7 | Synthetic Example 2 | 10 | 1 | 0.5 | 2.5 | 25 | 0.5 | B | A | A | A |
| | 8 | Synthetic Example 3 | 10 | 1 | 0.5 | 2.5 | 25 | 0.5 | C | A | B | B |
| | 9 | Synthetic Example 4 | 10 | 1 | 0.5 | 2.5 | 25 | 0.5 | A | A | B | B |
| | 10 | Synthetic Example 5 | 10 | 1 | 0.5 | 2.5 | 25 | 0.5 | B | A | A | A |
| | 11 | Synthetic Example 8 | 10 | 1 | 0.5 | 2.5 | 25 | 0.5 | A | A | A | A |
| | 12 | Synthetic Example 9 | 10 | 1 | 0.5 | 2.5 | 25 | 0.5 | B | A | A | A |
| | 13 | Synthetic Example 6 | 10 | 1 | 0.5 | 2.5 | 25 | 0.5 | A | A | C | C |
| | 14 | Synthetic Example 7 | 10 | 1 | 0.5 | 2.5 | 25 | 0.5 | B | A | C | C |
| | 15 | Synthetic Example 10 | 10 | 1 | 0.5 | 2.5 | 25 | 0.5 | B | A | C | C |
| Comparative Example | 1 | 1 | 200 | 200 | 100 | 120 | - | 120 | E | D | C | D |
| | 2 | 1 | 0.01 | 0.03 | 0.01 | 0.01 | - | 0.01 | E | D | D | D |
| | 3 | - | - | 1 | 0.5 | 2.5 | 25 | 0.01 | E | D | E | E |
| | 4 | Coating-type chromate treating agent | | | | | | | C | C | B | C |

Examples 16 to 18 and Comparative Example 5

The procedure of Example 1 was repeated to produce the surface treated plate. A finger print resistant coating (a fluoroalkyl thermoplastic resin) was formed as a functional coating instead of the primer and the top coat by bar coater No. 5 to a dry thickness of 1 μm, and the coating was dried at a metal surface temperature of 120°C to prepare the test plate. The results of the evaluation are shown in Table 2.

Examples 19 to 21 and Comparative Example 6

The procedure of Example 1 was repeated to produce the surface treated plate. A lubricant coating (a thermosetting polyether resin) was formed as a functional coating instead of the primer and the top coat by bar coater No. 5 to a dry thickness of 1 μm, and the coating was dried at a metal surface temperature of 120° C to prepare the test plate. The results of the evaluation are shown in Table 2.

Comparative Example 7

The procedure of Examples 16 and 19 was repeated except that the a commercially available coating-type chromate treating agent (the type containing a resin) was coated and dried to a chromium coating weight of 20 mg/m$^2$ instead of the metal surface treating agent, and a chromium-containing primer (a primer containing a strontium chromate pigment) was used to thereby produce and evaluate the test plates. The results of the evaluation are shown in Table 2.

Table 2

| | | Composition of the metal surface treating agent | | | | | | | | Coating adhesion | Corrosion resistance (2) | | Fingerprint resistance | Lubricity |
|---|---|---|---|---|---|---|---|---|---|---|---|---|---|
| | | Silane compound | | Silica | Zirconium ion | Thiocarbonyl group-containing compound | Acryl resin | Phosphate ion | | | | | |
| | No. | Type | g/l | g/l | g/l | g/l | g/l | g/l | | Worked area | Flat area | | |
| Example | 16 | Synthetic Example 1 | 10 | 1 | 0.5 | 2.5 | 25 | 0.5 | A | A | A | A | Not evaluated |
| | 17 | Synthetic Example 5 | 10 | 1 | 0.5 | 2.5 | 25 | 0.5 | A | A | A | A | Not evaluated |
| | 18 | Synthetic Example 6 | 10 | 1 | 0.5 | 2.5 | 25 | 0.5 | A | B | B | A | Not evaluated |
| | 19 | Synthetic Example 1 | 10 | 1 | 0.5 | 2.5 | 25 | 0.5 | A | A | A | Not evaluated | A |
| | 20 | Synthetic Example 5 | 10 | 1 | 0.5 | 2.5 | 25 | 0.5 | A | A | A | Not evaluated | A |
| | 21 | Synthetic Example 6 | 10 | 1 | 0.5 | 2.5 | 25 | 0.5 | A | B | B | Not evaluated | A |
| Comparative Example | 5 | - | - | 1 | 0.5 | 2.5 | 25 | 0.5 | E | E | D | C | Not evaluated |
| | 6 | - | - | 1 | 0.5 | 2.5 | 25 | 0.5 | E | E | D | Not evaluated | D |
| | 7 | Coating-type chromate treating agent | | | | | | | C | C | B | D | D |

The silane compound, the water-dispersible silica, the compound forming zirconium ion, the thiocarbonyl group-containing compound, the water-soluble acrylic resin, and the compound forming phosphate ion used in Tables 1 and 2 were the following commercial available products.

[Silane compound]

Synthetic Examples 1 to 10: the polymer compound described in Synthetic Examples 1 to 10

1: KBM-903 (γ-aminopropyltrimethoxysilane; manufactured by Shin-Etsu Chemical Co., Ltd.)

[Water dispersible silica]

SNOWTEX N (manufactured by Nissan Chemical Industries, Ltd.)

[Compound which forms zirconium ion]

Zircosol AC-7 (zirconyl ammonium carbonate manufactured by Daiichi Kigenso Kagaku Kogyo Co., Ltd.)

[Thiocarbonyl group-containing compound]

Thiourea (reagent)

[water-soluble acrylic resin]

polyacrylic acid (reagent) having a weight average molecular weight of 1,000,000

[Compound which forms phosphate]

Phosphoric acid (reagent)

[Evaluation]

Evaluation of the adhesion after bending, deep drawability, and corrosion resistance (1) for Examples 1 to 15 and Comparative Examples 1 to 4, and coating adhesion, corrosion resistance (2), finger print resistance, and lubricity for Examples 16 to 21 and Comparative Examples 5 to 7 were conducted according to the following methods and the following criteria.

<u>Adhesion after bending</u>

The test plate was bent at 180° C by a conical mandrel tester by sandwiching the test plate between a spacer (2 mmϕ) in the environment of 20°C. An adhesive tape was applied to and peeled from the area of the bent portion three times, and the degree of peeling was observed with a magnifier at a magnification of 20, and evaluated by the following criteria:

A: no cracks,
B: cracks on the front side of the worked area,
C: peeled area constituting less than 20% of the worked area,
D: peeled area constituting at least 20% and less than 80% of the worked area, and
E: peeled area constituting at least 80% of the worked area.

<u>Deep drawability</u>

Drawability test for drawing a cylinder was conducted in an environment of 20°C under the conditions including drawing ratio of 2.3; blank holding pressure of 2 t; punch R of 5 mm, die shoulder R of 5 mm without no oil. After the drawing, peel width was measured from the cross cuts, and the width was evaluated by the following criteria:

A: a blister width of less than 1 mm,
B: a blister width of at least 1 mm and less than 2 mm,

C: a blister width of at least 2 mm and less than 3 mm,
D: a blister width of at least 3 mm and less than 5 mm, and
E: a blister width of at least 5 mm.

Corrosion resistance (1)

(Cross cuts)

Cross cuts were formed in the test plate, and salt spray test based on JIS Z 2371 was conducted for 500 hours. Blister width on one side of the cut was measured, and evaluated by the following criteria:

A: a blister width of 0 mm,
B: a blister width of less than 1 mm,
C: a blister width of at least 1 mm and less than 3 mm,
D: a blister width of at least 3 mm and less than 5 mm, and
E: a blister width of at least 5 mm.

(Edges)

The test plate was subjected to the salt spray test based on JIS Z 2371 for 500 hours, and the blister width from the upper burr edge was evaluated by the same criteria as the cross cuts.

Coating adhesion

A melamine alkyd resin coating composition (Amirak No. 1000 manufactured by Kansai Paint Co., Ltd.) was coated on the pre-coating steel material produced in Examples and Comparative Examples with a bar coater to a dry thickness of 30 μm, and the coating was baked at a furnace temperature of 130° C for 20 minutes. After allowing to stand overnight, Erichsen 7 mm test was conducted. An adhesive tape was adhered to the worked area, and the tape was immediately peeled by pulling at an angle of 45°. The evaluation was conducted by the percentage of the peeled area according to the following criteria:

A: no peeling,
B: a percentage of the peeled area of less than 5%,
C: a percentage of the peeled area of at least 5% and less than 30%,
D: a percentage of the peeled area of at least 30% and less than 50%, and
E: a percentage of the peeled area of at least 50%.

Corrosion resistance (2)

(Flat area)

The pre-coating steel materials produced in Examples and Comparative Examples were subjected to salt spray test by the method described in JIS Z 2371 in an environment at a temperature of 35°C by spraying a 5% aqueous solution of sodium chloride to the test plate. After 240 hours, degree of white rust occurrence was evaluated by the following criteria:

A: no white rust,
B: white rust generation of less than 10%,
C: white rust generation of at least 10% and less than 20%,
D: white rust generation of at least 20% and less than 30%, and
E: white rust generation of at least 30%.

(Worked area)

The pre-coating steel materials produced in Examples and Comparative Examples were subjected to Erichsen 7 mm test, and 5% aqueous solution of sodium chloride was sprayed to the test plate in an environment of 35°C by the salt spray test according to the method described in JIS Z 2371. After 72 hours, degree of white rust occurrence in the worked area was evaluated by the same criteria as those used for the flat area.

Finger print resistance

Fingerprints were formed on the pre-coating steel materials produced in Examples 16 to 18 and Comparative Examples 5 and 7, and visibility of the fingerprints was evaluated with naked eye by the following criteria.

A: no fingerprints are visible,
B: the fingerprints are slightly visible,
C: the fingerprints are visible,
D: the fingerprints are significant, and
E: the fingerprints are very significant.

Lubricity

By using the pre-coating steel materials produced in Examples 19 to 21 and Comparative Examples 6 and 7, formability test was conducted by using a hydraulic press having a cylindrical punch at room temperature under the following conditions:

punch diameter: 70 mmϕ
blank diameter: 150 mm
load used for the pressing: 5 $kgf/cm^2$
press speed: $3.3 \times 10^{-2}$ m/s
tool conditions: FCD-500

In the test, scuffing was used for the indicator of the lubricity.
The press forming was conducted to 80% of the maximum forming height. The scuffing was visually observed, and evaluated by the following criteria.

A: forming could be conducted with no defects on the steel plate surface,
B: forming could be conducted with no defects on the steel plate surface but with slight discoloration on the sliding surface,
C: forming could be conducted with slight remnant of scuffing on the steel plate surface,
D: forming could be conducted with many scuffing lines on the steel plate surface, and
E: forming could not be conducted.

The results of the Examples and the Comparative Examples demonstrate that the primer composition of the present invention has positive effects on the adhesion.
In respect of numerical ranges disclosed herein it will of course be understood that in the normal way the technical criterion for the upper limit is different from the technical criterion for the lower limit, i.e. the upper and lower limits are intrinsically distinct proposals.

## Claims

**1.** A metal surface treating agent comprising

(A) a polymeric compound which contains in its molecule all of the following structures (a) to (c):

(a) a polymethylene or polyethyleneimine polymer skeleton containing 20 to 800 carbon atoms;
(b) primary, secondary, or tertiary amino group;
(c) silyl group having a hydrolysable group and/or hydroxy group bonded by silicon - carbon bond, and/or its (partial) hydrolysis and condensation product;

and is selected from the group consisting of
a water-soluble silicon-containing polymer compound containing two or more primary amino groups and a hydrolyzable silyl group and/or silanol group comprising the repeating unit represented by general formula (1), (2), (3), (4), (5) or (6)

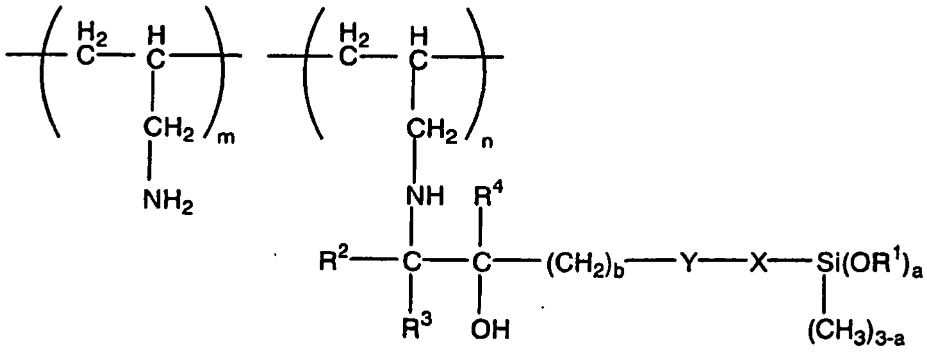

(1)

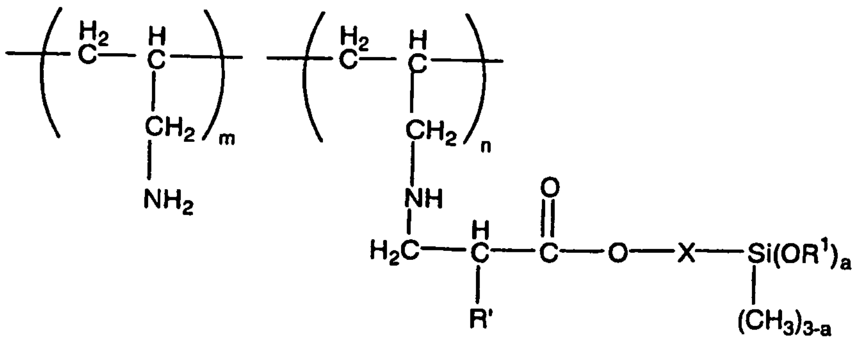

(2)

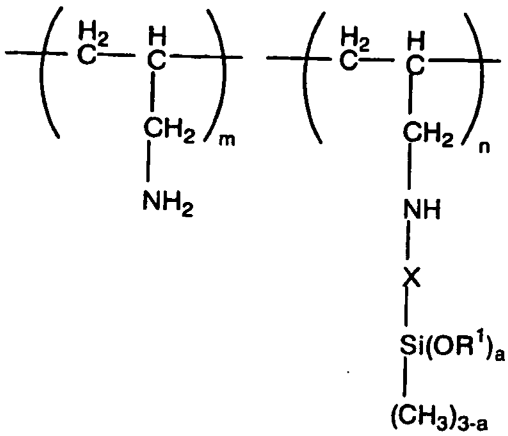

(3)

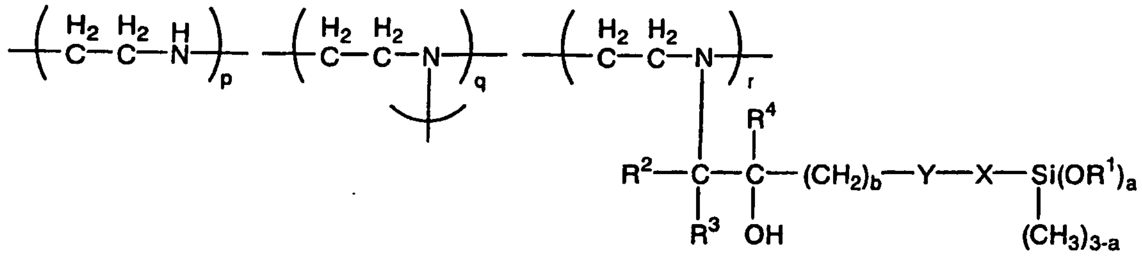

(4)

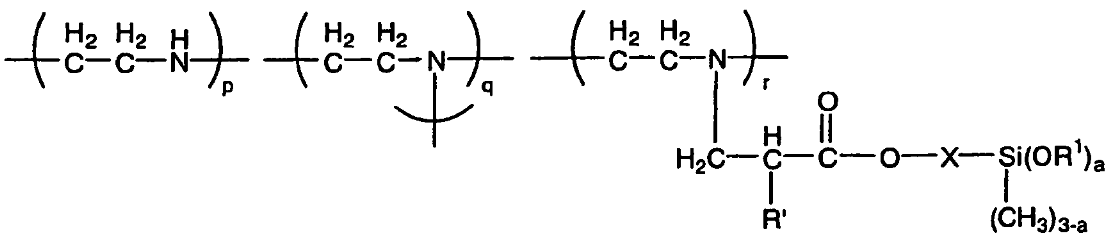

(5)

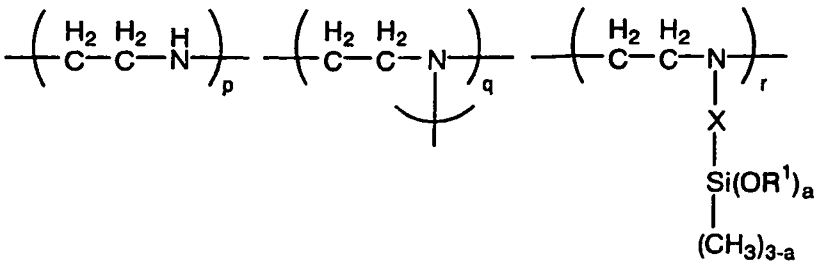

(6)

wherein m is $10 \leq m \leq 260$; n is $1 \leq n \leq 100$; wherein p is $10 \leq p \leq 200$, q is $1 \leq q \leq 200$, r is $1 \leq r \leq 100$, $R^1$ is hydrogen atom, an alkyl group containing 1 to 4 carbon atoms, or an acetyl group; a and b are independently an integer of 1 to 3; X is an alkylene group containing 1 to 10 carbon atoms optionally substituted with an alkyl group containing 1 to 6 carbon atoms; Y is a direct bond, oxygen atom, or a $CHR^5$ group; $R^2$, $R^3$, $R^4$, and $R^5$ are independently hydrogen atom or an alkyl group containing 1 to 6 carbon atoms, wherein $R^3$ or $R^4$ and $R^5$ may together represent a saturated carbon ring; R' is hydrogen atom or methyl group; and
(B) water and/or organic solvent dissolving component (A), and
further comprising any one of more of the following:

(a) water-dispersible silica, at a solid content of 0.05 to 100 g/L;
(b) zirconium compound, at a content in terms of zirconium ion of 0.01 to 50 g/L, and/or titanium compound at a content in terms of titanium ion of 0.01 to 50 g/L;
(c) thiocarbonyl group-containing compound, at a content of 0.01 to 100 g/L, and/or water-soluble acrylic resin at a content of 0.1 to 100 g/L;
(d) phosphate ion at a content of 0.01 to 100 g/L.

**2.** The metal surface treating agent according to claim 1 wherein m and n in the polymer compound satisfy

$$0.003 \leq n/(m+n) \leq 0.9.$$

3. The metal surface treating agent according to claim 1 wherein $10 \leq m \leq 75$, $1 \leq n \leq 50$, and $0.06 \leq n/(m+n) \leq 0.9$.

4. The metal surface treating agent according to claim 1 wherein p and r in the polymer compound satisfy

$$0.003 \leq r/(p+r) \leq 0.9.$$

5. The metal surface treating agent according to claim 1 wherein $10 \leq p \leq 75$, $10 \leq q \leq 75$, $1 \leq r \leq 50$, and $0.06 \leq r/(p+r) \leq 0.9$.

6. The metal surface treating agent according to any one of claims 1 to 5 wherein the compound (A) has a weight average molecular weight of 300 to 3000.

7. The metal surface treating agent according to any one of claims 1 to 6 wherein content of the compound (A) in the surface treating agent is in the range of 0.01 to 200 g/L.

8. A method for treating a metal surface wherein a surface of steel material, preferably a metal-coated steel material, is treated with a metal surface treating agent of any one of claims 1 to 7.

9. A surface-treated steel material produced by a method of claim 8.

10. A method for producing a coated steel material comprising the steps of treating a steel material, preferably a metal-coated steel material, with a metal surface treating agent of any one of claims 1 to 7 and further providing a coating layer thereon.

11. A coated steel material produced by a method of claim 10.

**Patentansprüche**

1. Metalloberflächenbehandlungsmittel, umfassend:

(A) eine polymere Verbindung, die in ihrem Molekül alle der folgenden Strukturen (a) bis (c) enthält:

(a) ein Polymethylen- oder Polyethyleniminpolymerskelett mit 20 bis 800 Kohlenstoffatomen;
(b) eine primäre, sekundäre oder tertiäre Aminogruppe;
(c) eine Silylgruppe mit einer hydrolysierbaren Gruppe und/oder einer Hydroxygruppe, die durch eine Silicium-Kohlenstoff-Bindung gebunden ist, und/oder ihr (partielles) Hydrolyse- und Kondensationsprodukt;

und aus der aus Folgendem bestehenden Gruppe ausgewählt ist:

einer wasserlöslichen siliciumhältigen Polymerverbindung mit zwei oder mehr primären Aminogruppen und einer hydrolysierbaren Silylgruppe und/oder Silanolgruppe, welche die durch die allgemeine Formel (1), (2), (3), (4), (5) oder (6) dargestellte Grundeinheit umfasst

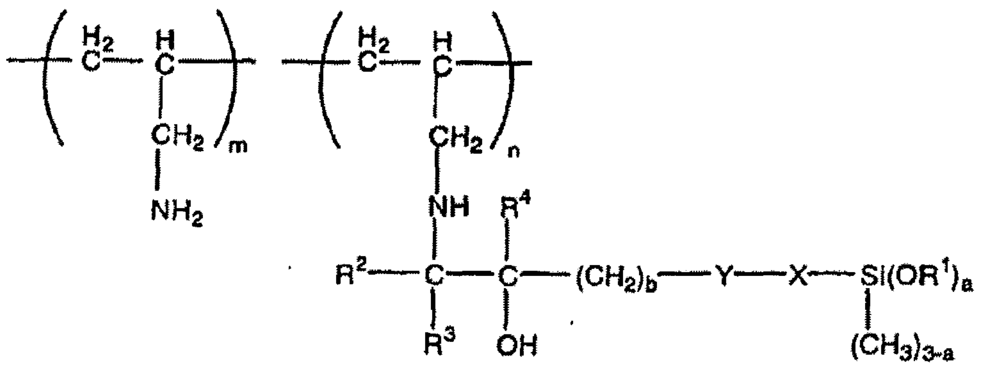

(1)

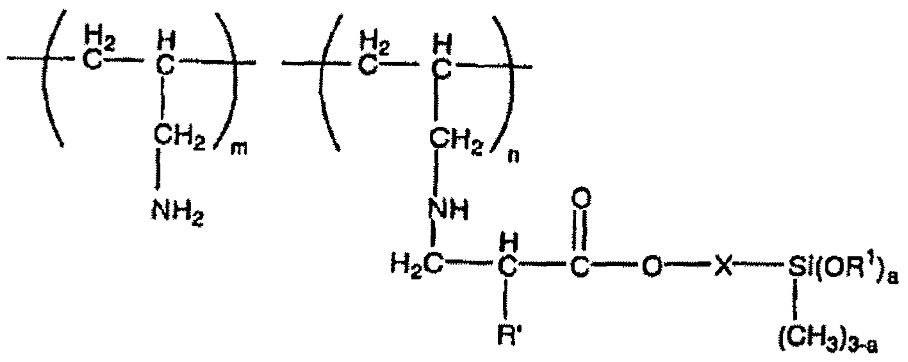

(2)

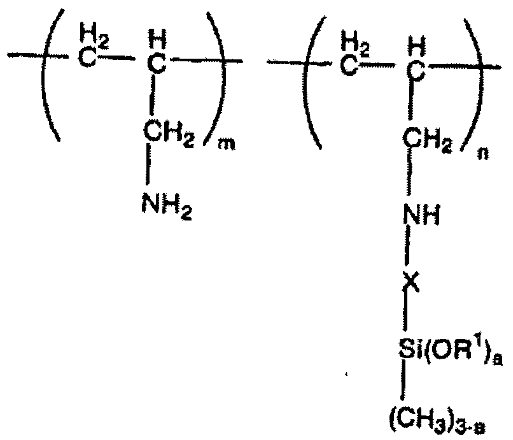

(3)

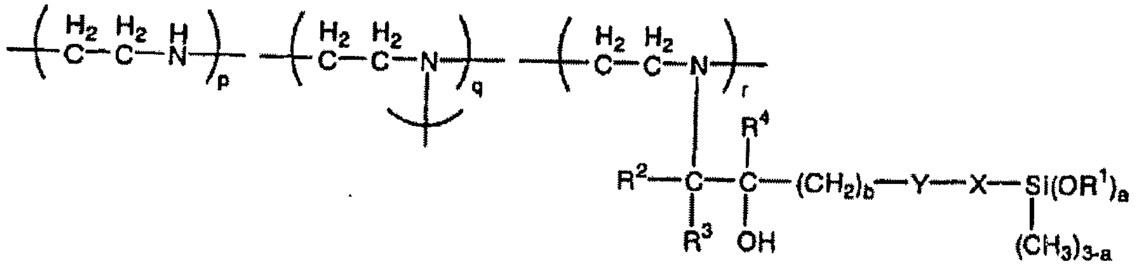

(4)

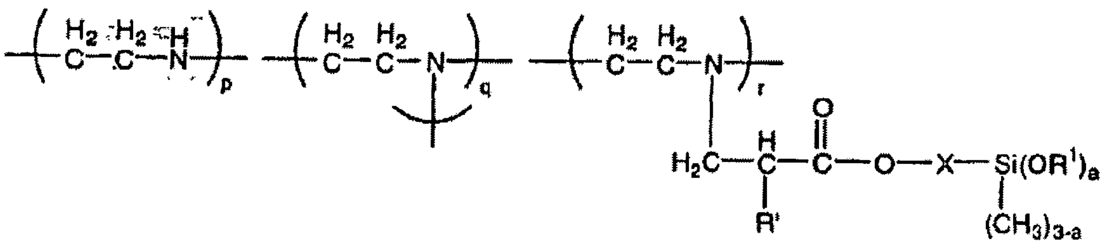

(5)

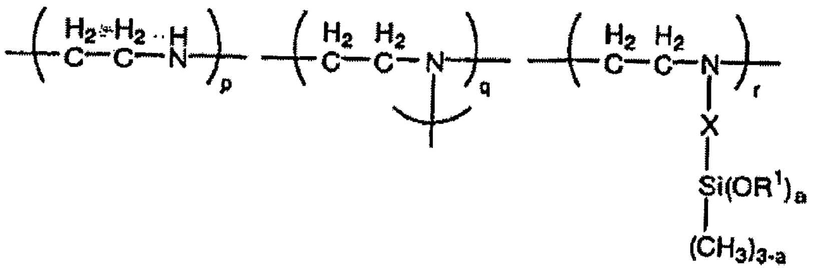

(6)

worin für m gilt: 10 ≤ m ≤ 260; für n gilt: 1 ≤ n ≤ 100; für p gilt: 10 ≤ p ≤ 200; für q gilt: 1 ≤ q ≤ 200; für r gilt: 1 ≤ r ≤ 100; $R^1$ ein Wasserstoffatom, eine Alkylgruppe mit 1 bis 4 Kohlenstoffatomen oder eine Acetylgruppe ist; a und b unabhängig voneinander eine ganze Zahl von 1 bis 3 sind; X eine Alkylengruppe mit 1 bis 10 Kohlenstoffatomen ist, die gegebenenfalls mit einer Alkylgruppe mit 1 bis 6 Kohlenstoffatomen substituiert ist; Y eine direkte Bindung, ein Sauerstoffatom oder eine $CHR^5$-Gruppe ist; $R^2$, $R^3$, $R^4$ und $R^5$ unabhängig voneinander ein Wasserstoffatom oder eine Alkylgruppe mit 1 bis 6 Kohlenstoffatomen sind, worin $R^3$ oder $R^4$ und $R^5$ zusammen einen gesättigten Kohlenstoffring darstellen können; R' ein Wasserstoffatom oder eine Methylgruppe ist; und

(B) Wasser und/oder ein organisches Lösungsmittel, das Komponente (A) löst, und

das weiters eines oder mehrere der Folgenden umfasst:

(a) in Wasser dispergierbares Silica mit einem Feststoffgehalt von 0,05 bis 100 g/l;

(b) eine Zirconiumverbindung in einem Gehalt, bezogen auf das Zirconiumion, von 0,01 bis 50 g/l und/oder eine Titanverbindung in einem Gehalt, bezogen auf das Titanion, von 0,01 bis 50 g/l;

(c) eine Thiocarbonylgruppen-hältige Verbindung in einem Gehalt von 0,01 bis 100 g/l und/oder ein wasserlösliches Acrylharz in einem Gehalt von 0,1 bis 100 g/l;

(d) ein Phosphation in einem Gehalt von 0,01 bis 100 g/l.

**2.** Metalloberflächenbehandlungsmittel nach Anspruch 1, wobei für m und n in der Polymerverbindung Folgendes gilt:

$$0{,}003 \leq n/(m+n) \leq 0{,}9.$$

**3.** Metalloberflächenbehandlungsmittel nach Anspruch 1, wobei gilt: $10 \leq m \leq 75$, $1 \leq n \leq 50$ und $0{,}06 \leq n/(m+n) \leq 0{,}9$.

**4.** Metalloberflächenbehandlungsmittel nach Anspruch 1, wobei für p und r in der Polymerverbindung Folgendes gilt:

$$0{,}003 \leq r/(p+r) \leq 0{,}9.$$

**5.** Metalloberflächenbehandlungsmittel nach Anspruch 1, wobei gilt: $10 \leq p \leq 75$, $10 \leq q \leq 75$, $1 \leq r \leq 50$ und $0{,}06 \leq r/(p+r) \leq 0{,}9$.

**6.** Metalloberflächenbehandlungsmittel nach einem der Ansprüche 1 bis 5, wobei die Verbindung (A) ein gewichtsmittleres Molekulargewicht von 300 bis 3000 aufweist.

**7.** Metalloberflächenbehandlungsmittel nach einem der Ansprüche 1 bis 6, wobei der Gehalt der Verbindung (A) im Oberflächenbehandlungsmittel im Bereich von 0,01 bis 200 g/l liegt.

**8.** Verfahren zur Behandlung einer Metalloberfläche, wobei eine Oberfläche eines Stahlmaterials, vorzugsweise eines metallbeschichteten Stahlmaterials, mit einem Metalloberflächenbehandlungsmittel nach einem der Ansprüche 1 bis 7 behandelt wird.

**9.** Metalloberflächenbehandlungsmittel, das durch ein Verfahren nach Anspruch 8 hergestellt ist.

**10.** Verfahren zur Herstellung eines beschichteten Stahlmaterials, das die Schritte des Behandelns eines Stahlmaterials, vorzugsweise eines metallbeschichteten Stahlmaterials, mit einem Metalloberflächenbehandlungsmittel nach einem der Ansprüche 1 bis 7 und weiters das Bereitstellen einer Überzugsschicht darauf umfasst.

**11.** Beschichtetes Stahlmaterial, das durch ein Verfahren nach Anspruch 10 hergestellt ist.

## Revendications

**1.** Agent de traitement de surface métallique comprenant

(A) un composé polymère qui contient dans sa molécule toutes les structures (a) à (c) suivantes:

(a) une charpente polymère de polyméthylène ou polyéthylène-imine contenant 20 à 800 atomes de carbone ;
(b) un groupe amino primaire, secondaire ou tertiaire ;
(c) un groupe silyle ayant un groupe hydrolysable et/ou un groupe hydroxy lié par une liaison silicium-carbone, et/ou son produit d'hydrolyse (partielle) et de condensation ;

et est choisi dans le groupe constitué par
un composé polymère siliconé soluble dans l'eau contenant deux ou plus de deux groupes amino primaire et un groupe silyle et/ou un groupe silanol hydrolysable comprenant le motif répétitif représenté par l'une des formules générales (1), (2), (3), (4), (5) et (6) suivantes :

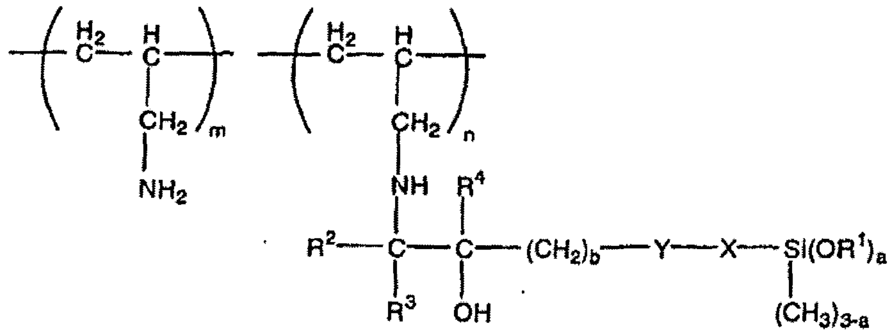

(1)

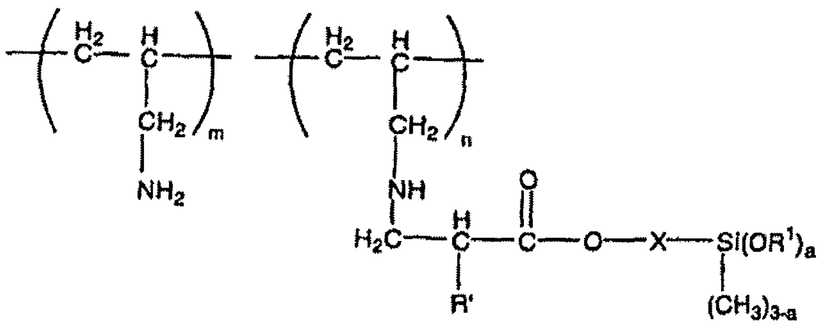

(2)

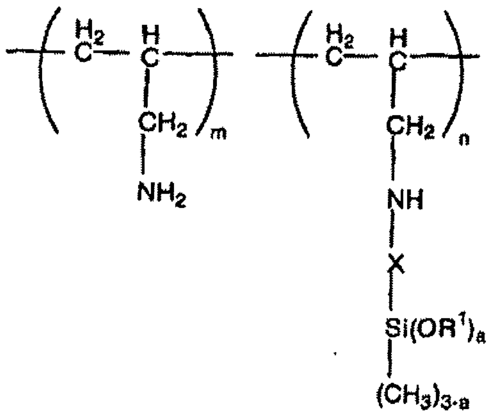

(3)

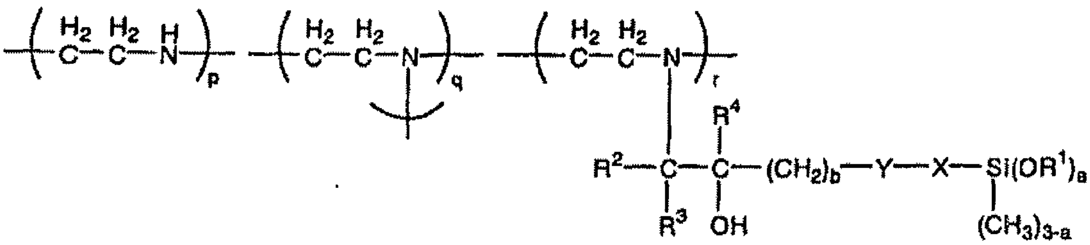

(4)

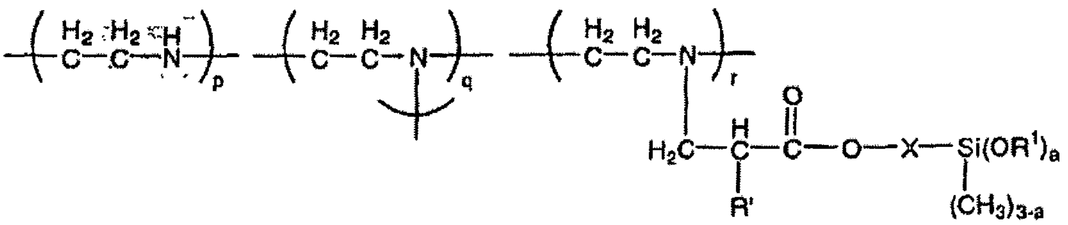

(5)

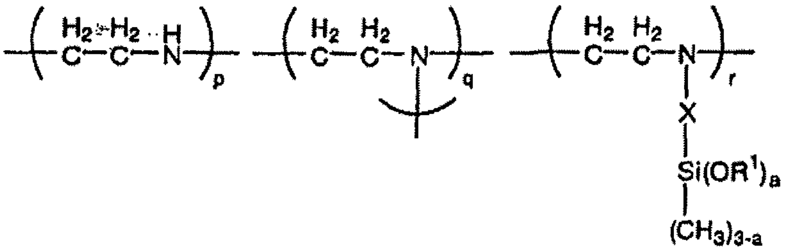

(6)

dans lesquelles $10 \leq m \leq 260$ ; $1 \leq n \leq 100$ ; $10 \leq p \leq 200$, $1 \leq q \leq 200$, $1 \leq r \leq 100$, $R^1$ est un atome d'hydrogène, un groupe alkyle contenant 1 à 4 atomes de carbone ou un groupe acétyle ; a et b sont indépendamment des entiers de 1 à 3 ; X est un groupe alkylène contenant 1 à 10 atomes de carbone éventuellement substitués par un groupe alkyle contenant 1 à 6 atomes de carbone ; Y est une liaison directe, un atome d'oxygène, ou un groupe $CHR^5$ ; $R^2$, $R^3$, $R^4$ et $R^5$ sont indépendamment des atomes d'hydrogène ou des groupes alkyle contenant 1 à 6 atomes de carbone, $R^3$ ou $R^4$ et $R^5$ pouvant représenter ensemble un cycle carboné saturé ; R' est un atome d'hydrogène ou un groupe méthyle ; et

(B) de l'eau et/ou un solvant organique dissolvant le composant (A), et

comprenant en outre l'un quelconque ou plusieurs des suivantes :

(a) une silice dispersible dans l'eau à une teneur en solide de 0,05 à 100 g/l ;

(b) un composé du zirconium en une teneur, en termes d'ion zirconium, de 0,01 à 50 g/l, et/ou un composé du titane en une teneur, en termes d'ion titane, de 0,01 à 50 g/l ;

(c) un composé contenant un groupe thiocarbonyle, en une teneur de 0,01 à 100 g/l, et/ou une résine acrylique soluble dans l'eau, en une teneur de 0,1 à 100 g/l ;

(d) l'ion phosphate en une teneur de 0,01 à 100 g/l.

**2.** Agent de traitement de surface métallique selon la revendication 1, dans lequel m et n dans le polymère satisfont à

$$0,003 \leq n/(m+n) \leq 0,9.$$

**3.** Agent de traitement de surface métallique selon la revendication 1, dans lequel $10 \leq m \leq 75$, $1 \leq n \leq 50$, et $0,06 \leq n/(m+n) \leq 0,9$.

**4.** Agent de traitement de surface métallique selon la revendication 1, dans lequel p et r dans le polymère satisfont à

$$0,003 \leq r/(p+r) \leq 0,9.$$

**5.** Agent de traitement de surface métallique selon la revendication 1, dans lequel $10 \leq p \leq 75$, $10 \leq q \leq 75$, $1 \leq r \leq 50$ et $0,06 \leq r/(p+r) \leq 0,9$.

6. Agent de traitement de surface métallique selon l'une quelconque des revendications 1 à 5, dans lequel le composé (A) a une masse moléculaire moyenne en masse de 300 à 3000.

7. Agent de traitement de surface métallique selon l'une quelconque des revendications 1 à 6, dans lequel la teneur en composé (A) dans l'agent de traitement de surface est située dans la plage allant de 0,01 à 200 g/l.

8. Procédé pour traiter une surface métallique, dans lequel une surface de matériau en acier, de préférence un matériau en acier revêtu de métal, est traitée avec un agent de traitement de surface métallique de l'une quelconque des revendications 1 à 7.

9. Matériau en acier traité en surface produit par un procédé de la revendication 8.

10. Procédé pour produire un matériau en acier revêtu comprenant les étapes consistant à traiter un matériau en acier, de préférence un matériau en acier revêtu de métal, avec un agent de traitement de surface métallique de l'une quelconque des revendications 1 à 7, et en outre à disposer dessus une couche de revêtement.

11. Matériau en acier revêtu produit par un procédé de la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11029724 A
- JP 8073775 A
- JP 2001316845 A
- JP 10060315 A
- DE 102005023107